# EUROPEAN PATENT APPLICATION

(11) **EP 2 559 664 A1**
(43) Date of publication of application: **20.02.2013**
(21) Application number: 11177922.9
(22) Date of filing: 18.08.2011
(51) Int. Cl.: C02F 1/32, C02F 1/76

(54) **Method and arrangement for water disinfection**

(71) Applicant: SIEMENS AKTIENGESELLSCHAFT, 80333 München (DE)
(72) Inventor: Sichel, Cosima, 89077 Ulm (DE)

(57) **Abstract**

The present invention relates to water disinfection.

Chlorine dioxide or chloramine (15) is added (12) to water containing microorganisms (7). An UV/chlorine dioxide AOP or an UV/chloramine AOP is applied (11) to said water by irradiating said water with UV irradiation. Said applied UV/chlorine dioxide AOP or said applied UV/chloramine AOP (11) causes inactivation of said microorganisms (13) in said water with said water (8) is being disinfected by said inactivation of said microorganisms (13).

UV driven chlorine dioxide AOPs or UV driven chloramine AOPs (11) for water disinfection (1) take advantage of combined action of the UV irradiation and generated high reactive radial species, mainly hydroxyl radicals (OH*). Energetic UV light damages irradiated cell DNA of microorganisms cells when absorbed by the cell DNA which will cause the microorganisms being inactive (microorganisms inactivation) (13). Hydroxyl radicals (OH*) generated by said UV driven chlorine dioxide AOPs or UV driven chloramine AOPs (11) will enhance cell damage by (advanced) oxidative attacks e. g. on the cell walls of the microorganisms which will lead to cell disruption and leakage of contents with these disturbances in cell activity also cause the microorganisms being inactive (microorganisms inactivation) (13).

## Description

### TECHNICAL FIELD OF THE INVENTION AND PRIOR ART

The present invention relates to water disinfection.

Water disinfection is known as a deactivation or killing of pathogenic microorganisms contained in water. Pathogenic microorganisms are destroyed or inactivated by water disinfection, resulting in termination of growth and reproduction of the pathogenic microorganisms.

Water disinfection as a chemical, physical or mechanical water disinfection can be attained by means of chemical, physical or mechanical disinfection.

Chemical water disinfection commonly takes place because of cell wall corrosion in cells of microorganisms, or changes in cell permeability, protoplasm or enzyme activity (because of a structural change in enzymes). These disturbances in cell activity cause microorganisms to no longer be able to multiply. This will cause the pathogenic microorganisms to die and/or being inactive (microorganisms inactivation).

Therefore inactivated pathogenic microorganisms remain detectable in disinfected water with certain methods, that will chemical water disinfection distinguish from water treatment removing microorganisms or degrading water contaminants from water by destroying microorganisms or contaminants structure.

These chemical water disinfectants will not only kill pathogenic microorganisms; they are often applied to provide a residual effect, which means that the water disinfectants remain active in water after disinfection. A disinfectant will prevent pathogenic microorganisms from growing in water after water disinfection (regrowth), causing the water to be recontaminated.

Its known that belong others following disinfectants can be used for chemical water disinfection: chlorine (Cl2), chlorine dioxide (Cl02), hypo chlorite (OCl―), ozone (03), halogens: bromine (Br2), iodine (J2), bromine chloride (BrCl), metals: copper (Cu2+), silver (Ag+), potassium permanganate (KMn04), phenols alcohols, soaps and detergents, hydrogen peroxide, several acids and bases.

For physical disinfection of water the following disinfectants can be used: ultraviolet light (UV), x- rays, gamma rays, ultrasonic waves, heat, etc.

Mechnical disinfection mainly applies to a removal of microorganisms by filtration. Small membrane size like ultra filtration (UF), nano filtration (NF) and reverse osmosis (RO) can remove even small microorganisms like virus efficiently.

With the appearance of chlorine resistant microorganisms such as *Cryptosporidium parvum* and *Giardia lamblia* in drinking water, attention has been drawn to alternative chemical water disinfection, especially chlorine alternative disinfectants.

Another aspect, driving the search for alternatives to chlorine disinfection is the appearance of chlorination by-products reported in many different contexts. One class of well known by products are potentially human carcinogenic Trihalomethanes (THMs) (Rook, J. J. (1977), "Chlorination reactions of fulvic acids in natural waters", Environmental Science and Technology 11, 478-482).

Within the last years many research works showed a suitability of Advanced Oxidation Processes (AOPs) for many applications, belong others for water disinfection ("Solar photocatalytic disinfection of agricultural pathogenic fungi: Fusarium species", C. Sichel, M. de Cara, J. Tello, J. Blanco, P. Fernandez-Ibáñez, Applied Catalysis B: Environmental 74 (2007) 152-160; "Figures of Merit for the technical development and application of Advanced Oxidation Processes", Bolton et al., J. of Advanced Oxidation Technologies, 1,1 (1996) 13-17).

Advanced Oxidation Processes (AOPs) for water disinfection use a potential of high reactive radial species, mainly hydroxyl radicals (OH*), for oxidation of toxic or none or less biodegradable hazardous water contaminants.

Due to the high oxidation potential and low selectivity of the hydroxyl radicals, therefore reacting with almost every organic compound, the AOP can therefore be used to remove or degrade the contaminants, i.e. residuals of pesticides, pharmaceuticals, personal care products or x-ray contrast media, from (contaminated) water.

A versatility of AOPs is also enhanced by the fact that they offer different possible ways for hydroxyl radical production, thus allowing a better compliance with specific treatment requirements.

A suitable, traditionally application of AOP to wastewater disinfections must consider that they make use of expensive reactants/oxidants such as H₂O₂, and/or O₃ for generating hydroxyl radicals.

"Photocatalysis with solar energy at a pilot-plant scale: an overview", Malato et al., Applied Catalysis B: Environmental 37 (2002) 1-15 reviews a use of sunlight to produce hydroxyl radicals.

At an ultraviolet driven AOP (UV AOP) UV radiation will be used to generate the hydroxyl radicals by a photolysis. Traditional UV driven AOPs for water disinfection can be resumed as UV/H₂O₂ or UV/Ozone (UV/O₃) or their combinations, since H₂O₂ or O₃ are being photolysed by UV radiation producing hydroxyl radicals directly and indirectly.

An UV driven chlorine dioxide (UV/ClO2) process as an AOP, is known from "Advanced oxidation processes (AOPs) with use of UV/ClO2 in aqueous solutions of reactive azo dyes and in their effluents", I. G. Karali et al., proceedings of the 10th International Conference on Environmental Science and technology, Kos Island, Greece, 5-7 September 2007 for a colour removal of azo dye contaminants. A degradation of parachlorobenzoic acid and nitrobenzene has been shown irradiating solutions containing free chlorine (HOCl, Cl₂, C10^{―}) and chloramine (ClN) containing in "Chlorine photolysis and subsequent OH radical production during UV treatment of chlorinated water", Michael J. Watts, et al., Water Research 41, 2871-2878, 2007, via production of hydroxyl radicals.

It is further known from "Assessment of the UV/Chlorine process as an advanced oxidation process", Jing Jin et al., Water Research 45, 1890-1896, 2011, that such an UV/chlorine AOP could be a treatment option for disinfection by-products (DBPs) that are produced during chlorine disinfection in swimming pools and can be used to inactivate water-borne pathogenic microorganisms and to destroy hazardous organic compounds in drinking water and wastewater.

Equipments for dosing as well as for a controlled dosing of chlorine species, for example such as chlorine or chlorine dioxide, to water to be treated are known as well as equipments for irradiating water with UV, for example "Wallace & Tiernan®, Wasseraufbereitungs- und Desinfektionssysteme", Oktober 2010.

### SUMMARY OF THE INVENTION

It is a first objective of the invention to provide a method and an arrangement by which the above-mentioned shortcomings in water disinfection can be mitigated.

It is a further objective of the invention to provide a method and an arrangement for efficient, ecological and economical water disinfection.

These objectives are according to the invention achieved by providing a method for water disinfection. This method comprising the following steps:
- adding chlorine dioxide or chloramine to water containing microorganisms; said added chlorine dioxide or chloramine will be dissolved in said water (relevant chlorine species),
- applying an UV/chlorine dioxide AOP or an UV/chloramine AOP to said water by irradiating said water with UV irradiation; said applied UV/chlorine dioxide AOP or said applied UV/chloramine AOP causes inactivation of, i.e. is inactivating, said microorganisms in said water,
- disinfecting said water by said inactivation of said microorganisms in said water.

These objects are according to the invention also achieved by providing an arrangement for water disinfection. Said arrangement for water disinfection comprising:
- a dosing means arranged for adding chlorine dioxide or chloramine to water containing microorganisms; said chlorine dioxide or chloramine being dissolved in said water,
- a disinfection chamber with an inlet and an outlet for said water flowing through said disinfection chamber and with an UV source,
- said UV source is being arranged in said disinfection chamber for irradiating said water with UV irradiation while said water is flowing through said disinfection chamber,
- said disinfection chamber being arranged for applying an UV/chlorine dioxide AOP or an UV/chloramine AOP to said water while said water is flowing through said disinfection chamber and being irradiated with said UV irradiation, at which said microorganisms contained in said water is being inactivated by said UV/chlorine dioxide AOP or said UV/chloramine AOP applied to said water and said water is being disinfected.

In other words - the invention relates to water disinfection using an UV driven chlorine dioxide AOP, i.e. an UV/chlorine dioxide AOP, or an UV driven chloramine AOP, i.e. an UV/chloramine AOP.

Chlorine dioxide or chloramine is added to water containing microorganisms, especially containing pathogenic microorganisms. Said added chlorine dioxide or chloramine is dissolved in said water.

An UV/chlorine dioxide AOP or an UV/chloramine AOP is applied to said water by irradiating said water with UV irradiation. Said applied UV/chlorine dioxide AOP or said applied UV/chloramine AOP causes inactivation of, i.e. is inactivating, said microorganisms in said water. Inactivated means that microorganisms are no longer be able to multiply, no longer be active and/or die.

Said water is being disinfected by said inactivation of said microorganisms in said water.

UV driven chlorine dioxide AOPs or UV driven chloramine AOPs for water disinfection take advantage of combined action of the UV irradiation and generated high reactive radial species, mainly hydroxyl radicals (OH*).

Energetic UV light damages irradiated cell DNA of microorganisms cells, i.e. pathogenic microorganisms cells, directly inducing pyrimidine and purine dimers and pyrimidine adducts when absorbed by the cell DNA. This will cause the microorganisms to no longer be able to multiply and/or being inactive ― and consequently to die (microorganisms inactivation).

Hydroxyl radicals (OH*) generated by said UV driven chlorine dioxide AOPs or UV driven chloramine AOPs will enhance cell damage by (advanced) oxidative attacks e.g. on the cell walls of microorganisms, i.e. pathogenic microorganisms, which will lead to cell disruption and leakage of contents - with these disturbances in cell activity also cause microorganisms being inactive, to no longer be able to multiply - and to die out (microorganisms inactivation).

Water disinfection by UV driven chlorine dioxide AOPs or UV driven chloramine AOPs are further advantageous as long as chlorine dioxide or chloramine has a higher pH-stability - for example in comparison to chlorine. Said water disinfection by UV driven chlorine dioxide AOPs or UV driven chloramine AOPs ― while using chlorine dioxide or chloramine as reactants/oxidants for said UV driven AOPs ― lead to a much more effective disinfection treatment.

Chlorine dioxide or chloramine is a fast and effective microbial disinfectant. Both disinfectants have less affinity for the formation of THMs and especially ClO2 is well known to produce low amounts of chlorinated disinfection by products (DBPs). The efficiency of chlorine dioxide and chloramine increase as the pH is increased as long as microorganisms inactivation is much higher as higher pH-values. Ct―values of chlorine dioxide or chloramine are less as Ct―values of chlorine expressing said effectiveness of chlorine dioxide or chloramine.

Water disinfection by UV driven chlorine dioxide AOPs or UV driven chloramine AOPs are further more advantageous as long as these inventive disinfection processes are expected to remove and/or degrade emerging contaminants (EC) like pesticides, hormones and medical drugs, endocrine disrupting chemicals (EDC) and/or hazardous organic compounds from water.

Even more, such water disinfection by UV driven chlorine dioxide AOPs or UV driven chloramine AOPs could also have the ability to remove and/or degrade disinfection by-products (DBPs) from water that are produced during disinfection.

Therefore, the invention provides a new, effective process as a very efficient water disinfection procedure reaching a targeted water quality at a very economic, ecological and practical way.

According to a preferred embodiment, said chloramine to be added - for example by using a dosing means - is mono-/di-/trichloramine, which will - as well as chlorine dioxide - be dissolved in said water as chlorine dioxide or chloramine - both herein specified easily as relevant chlorine species. In other words, chlorine dioxide and chloramine can be used as precursor for said UV driven AOP reaction used for water disinfection.

Said relevant chlorine species is known as a concentration of residual chlorine dioxide respectively chloramine in water.

A controller system could be used for controlling said adding of said chlorine dioxide or chloramine. Said adding of said chlorine dioxide or said chloramine could be realized by use of a dosing means, for example a dosage apparatus, controlled by said controller.

According to a further preferred embodiment, a concentration of said chlorine dioxide or chloramine or of said relevant chlorine species is measured - especially by using a measuring means - before (initial relevant chlorine species) and/or after (remaining relevant chlorine species) irradiating said water with said UV irradiation.

Preferable said measuring means for measuring said concentration is a sensor measuring a chlorine dioxide or chloramine equivalent. Such a sensor, for example a membrane sensor CD7 (Chlorine Dioxide) or a membrane sensor FCl (Free Chlorine equivialents) of Wallace & Tiernan (Wallace & Tiernan, Siemens, Water Technologies, Multi-Funktions-Analysesysteme, MFA―FC1, -CD7), is well known, long term stable while measuring and requires low maintenance costs.

As well open cell amperiometric systems can be used for such AOP analyzer and controller systems.

Measuring the concentration of said relevant chlorine species before irradiating said water with said UV irradiation means measuring an initial concentration of said relevant chlorine species before applying said UV/chlorine dioxide AOP or UV/chloramine AOP.

The dosing means could be installed in a way that allows homogenization of the added, i.e. injected, chlorine dioxide or chloramine before said chlorine dioxide/chloramine measurement and before the water to be disinfected reaches the UV source to be irradiated with UV.

Measuring the concentration of said relevant chlorine species after irradiating said water with said UV irradiation means measuring a remaining concentration of said relevant chlorine species after applying said UV driven AOP.

As chlorite will be produced during disinfection with chlorine dioxide (ClO2) ― as disinfection by-product - a concentration of said chlorite could also be measured, especially after irradiating the water to be disinfected, i.e. after said UV driven AOP applied to said water to be disinfected.

Sensor signals and/or sensor data according to said measured concentration(-s) could also be processed by said controller to control the water disinfection.

Said UV/chlorine dioxide AOP and said UV/chloramine AOP could be also controlled by using said measured concentration of said relevant chlorine species, especially by using said measured concentration of said initial relevant chlorine species and/or said remaining relevant chlorine species - as well as said concentration of said chlorite produced by said UV driven AOP, i.e. said water disinfection.

Controlling said UV/chlorine dioxide AOP and said UV/chloramine AOP could mean to adjust adding chlorine dioxide or chloramine and/or to adjust irradiation, especially depending on said measured concentration(-s).

According to a preferred embodiment said chlorine dioxide or chloramine to be added could be added as to a concentration of said initial relevant chlorine species less than 10 ppm, especially less than 8 ppm, more especially less than 6 ppm. Said chlorine dioxide to be added could also be added as to a concentration of said initial relevant chlorine species less 0,5 mg/l chlorine dioxide, especially less than 0,1 mg/l chlorine dioxide.

According to a preferred embodiment said UV source is an UV lamp being arranged in said disinfection chamber while said water to be irradiated is flowing through said disinfection chamber.

Said UV irradiation could be applied with an irradiation dose of about 200 J/m² ― 4000 J/m². Furthermore said UV irradiation could have a wavelength of about 100 nm - 400 nm, especially having a wavelength of about 200 nm - 400 nm, furthermore especially of about 250 nm - 260 nm.

In a preferred embodiment said UV source will be a poly-chromatic irradiator/medium pressure UV source. Medium pressure UV sources/lamps provide an expanded wavelength spectrum and could be constructed more compact.

Said UV source could also be a mono-chromatic irradiator/low pressure UV source, for example a low pressure amalgam UV lamp or a low pressure mercury UV lamp. Low pressure UV lamps are highly efficient while providing a small spectrum by a wavelength of about 257,3 nm, less energy input combined with less costs.

As well solar irradiance can be used as an UV source.

Furthermore an UV sensor (or more) - for a low pressure UV source or a medium pressure UV source - and/or a UV filter (or more) could be used in combination with said UV irradiation provided by said UV source, e.g. low pressure UV source or medium pressure UV source, for controlling an irradiance of said UV irradiation, especially while measuring said UV irradiation filtered by said UV filter.

According to a preferred embodiment a further filter could be used - in combination with said UV source - filtering said UV irradiation to irradiate the water, e.g. to cut-off the UV irradiation at predetermined wavelength. E.g., a quartz sleeve could be used to achieve cut-off of the UV irradiation at 240 nm to irradiate said water to be disinfected, e.g. potable water, with UV wavelength longer than 240 nm.

According to a preferred embodiment said water to be disinfected flows at a flow rate of 50 m³/h ― 1000 m³/h, especially at a flow rate of about 200 m³/h. The flow rate can be controlled/monitored by use of a flow control. Often the flow rate is a given requirement of the customers and therefore the monitoring of variations in flow rate can be used to adjust the AOP water disinfection accordingly. According to a preferred embodiment said water to be disinfected, for example potable water, (municipal)waste water, industrial-/process water, pool water or ultrapure water, could be contaminated water, especially water contaminated with pathogenic microorganisms to be inactivated by said inventive water disinfection. The water to be disinfected could also be contaminated with emerging contaminants (EC), endocrine disrupting chemicals (EDC) and/or hazardous contaminants, especially with low bio degradability, e.g. residuals of pesticides, pharmaceuticals, personal care or x-ray contrast media to be degraded by said inventive water disinfection.

Further advantages as well as advantageous features of the invention appear from the following description.

### BRIEF DESCRIPTION OF THE DRAWINGS

With reference to the appended drawings, below follows a specific description of an embodiment of the invention cited as example, water disinfection using an UV/chlorine dioxide AOP.

In the drawings:
- Figure 1: is a schematic illustration of a water disinfection system according to an embodiment of the invention,
- Figure 2: is a schematic illustration of a water disinfection process according to an embodiment of the invention.

### DETAILED DESCRIPTION OF AN EMBODIMENT OF THE INVENTION

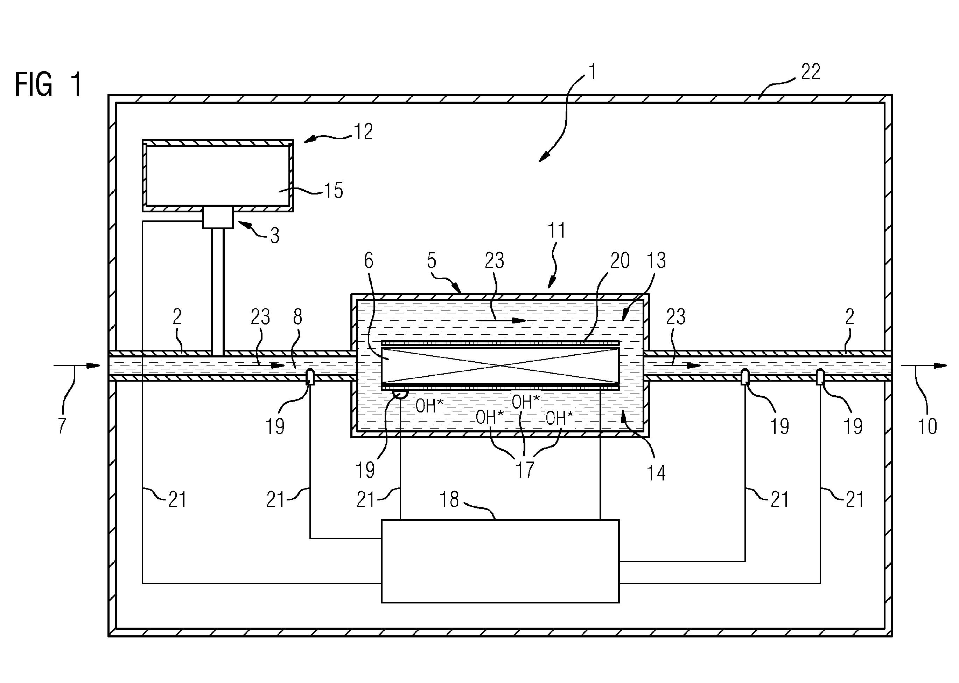

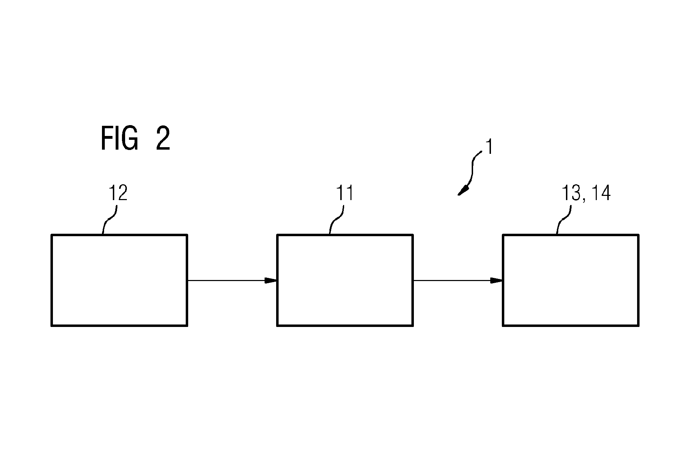

The present invention is directed to an arrangement and a method for a water disinfection using an UV/chlorine dioxide AOP 1, cited also just as water disinfection 1, as schematically illustrated in FIG 1 and FIG 2.

Described and illustrated water disinfection 1 using said UV/chlorine dioxide AOP is one embodiment of the invention as well as the water disinfection 1 can also use an UV/chloramine AOP accordingly.

The water disinfection 1 as illustrated in FIG 1 and FIG 2 will be used for disinfecting water, for example municipal waste water, pool water or drinking water.

The water to be disinfected (contaminated water) 7 contains pathogenic microorganisms which can be inactivated by the water disinfection 1 as well as hazardous contaminants, especially residuals of pesticides, pharmaceuticals, personal care products which can be degraded by the water disinfection 1 as well.

The contaminated water 7 will flow through a water circulation using a piping system 2 discharging said contaminated water 7 from the source (waste water disinfection plant, pool or drinking water disinfection plant - not shown), pumping said discharged, contaminated water 7 through the arrangement for the water disinfection 1 being disinfected and decontaminated by the process for the water disinfection 1 and discharging the disinfected and decontaminated water 10 (disinfected water 10) in the water body, pool or fresh water piping system.

The arrangement for the water disinfection 1 comprises two sections for treating the contaminated water 7 - both sections arranged within a housing 22.

The two sections are arranged in flow direction 23 of the water to be disinfected, i.e. contaminated water 7, so that the water to be disinfected can pass - fed by a pump (not shown) - the two sections of the arrangement 1.

In the first section chlorine dioxide 15 is added 12 to the contaminated water 7. A dosing apparatus 3 is functionally connected to the piping system 2 arranged for adding 12 the chlorine dioxide 15 to the contaminated water 7 while the contaminated water 7 is passing the first section.

The chlorine dioxide 15 added 12 to the water will be dissolved in the water as free chlorine dioxide (chlorinated water 8).

A sensor 19 is arranged within the first section for measuring the concentration of the free chlorine dioxide in the chlorinated water 8. The sensor 19 as well as the dosing apparatus 3 is connected to an analyser and controller system 18, cited as a controller 18, via a circuit 21 controlling the adding 12 of the chlorine dioxide 12.

The chlorinated water 8 - leaving the first section - enters the second section, i.e. a disinfection chamber 5 with one or several low pressure, mono-chromatic amalgam UV lamps 6, to be irradiated with UV irradiation. While the chlorinated water 8 being irradiated with UV an UV/chlorine AOP 11 will be processed within the chlorinated water 8.

FIG 1 shows an UV sensor 19 and a UV filter 20 being arranged at the UV lamp 6 used for controlling the irradiance of said UV irradiation while measuring said UV irradiation filtered by said UV filter 20. The UV sensor 19 as well as the UV lamp 6 is also connected to the controller 18 via a circuit 21.

The irradiation of the chlorinated water 8 - provided with an irradiation dose of about 1000 J/m² ― yields radical species 17, especially OH* radicals 17, since it is possible to generate radical species 17 from irradiation of chlorine dioxide with UV.

The number of the radicals 17 depends, belong other parameters, on the initial chlorine dioxide concentration of the chlorine 15 added 12 - which will be in this case added as to a concentration of about 0,1 mg/l ― as well as the irradiance of the UV source/lamps 6.

The UV/chlorine dioxide AOP 11 takes the advantage of combined action of the UV irradiation and generated high reactive radicals 17.

UV light damages irradiated cell DNA of the pathogenic microorganisms cells contained in the contaminated water 7/chlorinated water 8 directly inducing pyrimidine and purine dimers and pyrimidine adducts when absorbed by the cell DNA. This will cause the pathogenic microorganisms to no longer be able to multiply, being inactive and to die out (microorganisms inactivation 13).

High reactive radicals 17 generated by said UV driven chlorine dioxide AOP 11 will enhance cell damage by (advanced) oxidative attacks on the cell walls of the pathogenic microorganisms contained in the contaminated water 7/chlorinated water 8. This will lead to cell disruption and leakage of contents - with these disturbances in cell activity also cause the pathogenic microorganisms being inactive, no longer be able to multiply - and to die out (microorganisms inactivation 13).

As well as the UV/chlorine dioxide AOP 11 further uses the potential of the high reactive radicals 17 for oxidation of the hazardous contaminants contained in the contaminated water 7/chlorinated water 8 while degrading, i.e. eliminating, the hazardous contaminants of the contaminated water 7/chlorinated water 8 (contaminants elimination 14). The contaminated water 7/chlorinated water 8 is being disinfected by said microorganisms inactivation 13 of said microorganisms as well as being decontaminated by said contaminants elimination 14 - as which disinfected and decontaminated water 10, just specified as disinfected water 10 is leaving the disinfection chamber 5.

The disinfection chamber 5 can have varying shape and size. FIG 1 shows said disinfection chamber 5 shaped as a cylinder being passed by the chlorinated water 8.

Chlorine dioxide 15 as a precursor for the process is not completely degraded during the UV/chlorine AOP 11, i.e. water disinfection 1, and remains (partly) in the disinfected water 10 - as well as - chlorite is produced as disinfection by-products.

Leaving the disinfection chamber 5 the disinfected water 10 - containing the remaining free chlorine dioxide as well as the produced chlorite - will be discharged in the waste water disinfection plant, pool or drinking water disinfection plant.

Sensors 19 are arranged - downstream the UV/chloride dioxide AOP 11/disinfection chamber 5 and upstream the disinfected water 10 being discharged in the waste water disinfection plant, pool or drinking water disinfection plant - for measuring the concentration of the remaining free chlorine dioxide in the disinfected water 10 as well as the concentration of the produced chlorite in the disinfected water 10.

The sensors 19 as well as the dosing apparatus 4 are connected to the controller 18 via a circuit 21 controlling the adding 12 of the chlorine dioxide 15.

## Claims

1. Method for water disinfection of water containing microorganisms comprising the following steps
- adding (12) chlorine dioxide or chloramine (15) to water containing microorganisms (7), said chlorine dioxide or chloramine (15) being dissolved (8) in said water (8) (relevant chlorine species),
- applying an UV/chlorine dioxide AOP or an UV/chloramine AOP (11) to said water (8) by irradiating said water with UV irradiation and inactivating said microorganisms thereby (13),
- disinfecting said water (8) by said inactivation (13) of said microorganisms.

2. Method for water disinfection according to any preceding claim wherein said chloramine (15) to be added is mono-/di-/trichloramine.

3. Method for water disinfection according to any preceding claim wherein a concentration of said relevant chlorine species is measured before (initial relevant chlorine species) and/or after (remaining relevant chlorine species) irradiating said water with said UV irradiation (11).

4. Method for water disinfection according to the preceding claim wherein said adding (12) of chlorine dioxide or chloramine (15) is controlled by using said measured concentration of said relevant chlorine species, especially by using said measured concentration of said remaining relevant chlorine species.

5. Method for water disinfection according to any preceding claim wherein a concentration of chlorite being produced as a disinfection by-product of said water disinfection is measured in said disinfected water (10).

6. Method for water disinfection according to the preceding claim wherein said adding (12) of chlorine dioxide or chloramine (15) is controlled by using said measured concentration of said chlorite.

7. Method for water disinfection according to any preceding claim wherein said chlorine dioxide or chloramine (15) is added (12) as to a concentration of an initial relevant chlorine species of about 0,1 mg/l and/or about 6 ppm, especially less than 0,1 mg/l and/or less than 6 ppm.

8. Method for water disinfection according to any preceding claim wherein said UV irradiation (11) will be applied with an irradiation dose of about 200 J/m² ― 4000 J/m² and/or said UV irradiation having a wavelength of about 100 nm - 400 nm, especially having a wavelength of about 200 nm - 400 nm, further more especially of about 250 nm - 260 nm.

9. Method for water disinfection according to any preceding claim used for water disinfection of (municipal) potable water, waste water, industrial-/process water, pool water or ultrapure water, especially containing pathogenic microorganisms, and/or used for water decontamination of said (municipal) potable water, waste water, industrial-/process water or ultrapure water, especially being contaminated with emerging contaminants (EC), endocrine disrupting chemicals (EDC) and/or hazardous contaminants.

10. Arrangement for water disinfection of water containing microorganisms comprising
- a dosing means (3) arranged for adding (12) chlorine dioxide or chloramine (15) to water containing microorganisms, said chlorine dioxide or chloramine (15) being dissolved (8) in said water (12) (relevant chlorine species),
- a disinfection chamber (5) with an inlet and an outlet for said water flowing through said disinfection chamber (5) and with an UV source (6),
- said UV source (6) being arranged in said disinfection chamber (5) for irradiating said water with UV irradiation while said water is flowing through said disinfection chamber (5),
- said disinfection chamber (5) being arranged for applying an UV/chlorine dioxide AOP or an UV/chloramine AOP (11) to said water while said water is flowing through said disinfection chamber (5) and being irradiated with said UV irradiation, at which said microorganisms contained in said water is being inactivated by said UV/chlorine dioxide AOP or said UV/chloramine AOP applied to said water and said water is being disinfected.

11. Arrangement for water disinfection according to any preceding claim further comprising an UV sensor (19) and/or a filter (20) arranged for controlling an irradiance of said UV irradiation, especially while measuring said UV irradiation filtered by said filter (20) or filtering said UV irradiation for irradiating said water to be disinfected (8).

12. Arrangement for water disinfection according to any preceding claim wherein said UV source (6) is a mono-chromatic irradiator or a poly-chromatic irradiator and/or said UV source is a low pressure UV source or a medium pressure UV source.

13. Arrangement for water disinfection according to any preceding claim further comprising at least one measuring and/or analysing means (18, 19), said measuring means being arranged for measuring a concentration of said relevant chlorine species before (initial relevant chlorine species) and/or after (remaining relevant chlorine species) irradiating said water with said UV irradiation and/or said analysing means being arranged for analysing said measured concentration.

14. Arrangement for water disinfection according to any preceding claim further comprising at least one measuring and/or analysing means (18, 19), said measuring means being arranged for measuring a concentration of chlorite being produced as a disinfection by-product of said water disinfection and/or said analysing means being arranged for analysing said measured concentration.

15. Arrangement for a water disinfection according to any preceding claim further comprising a controller system (18) arranged for controlling said adding (12) of said chlorine dioxide or chloramine (15), especially using a measured concentration of a initial relevant chlorine species and/or a remaining relevant chlorine species and/or chlorite being produced as a disinfection by-product of said water disinfection.
